(19) Europäisches Patentamt

European Patent Office

Office européen des brevets

(11) Veröffentlichungsnummer: **0 290 870 B1**

# (12) EUROPÄISCHE PATENTSCHRIFT

(45) Veröffentlichungstag der Patentschrift: **12.02.92**

(21) Anmeldenummer: **88106768.0**

(22) Anmeldetag: **27.04.88**

(51) Int. Cl.⁵: **B01D 53/08**, B01D 46/32

(54) **Einrichtung zum gesteuerten Abzug möglichst planparalleler Schichten fliessfähigen Schüttgutes an der Unterseite einer in einem kreiszylindrischen Behälter enthaltenen Schüttgutsäule und Verwendung bei einem Wanderbettfilter.**

(30) Priorität: **11.05.87 DE 3715647**
**17.08.87 DE 3727405**

(43) Veröffentlichungstag der Anmeldung:
**17.11.88 Patentblatt 88/46**

(45) Bekanntmachung des Hinweises auf die
Patenterteilung:
**12.02.92 Patentblatt 92/07**

(84) Benannte Vertragsstaaten:
**CH DE FR GB LI SE**

(56) Entgegenhaltungen:
**EP-A- 0 225 475**
**DE-C- 342 402**
**US-A- 2 493 356**
**US-A- 4 224 147**

(73) Patentinhaber: **SIEMENS AKTIENGESELL-
SCHAFT
Wittelsbacherplatz 2
W-8000 München 2(DE)**

(72) Erfinder: **Mathewes, Wolfgang, Dipl.-Ing.
Nelkenweg 75
W-6300 Giessen(DE)**

## Beschreibung

Die Erfindung bezieht sich auf eine Einrichtung zum gesteuerten Abzug möglichst planparalleler Schichten eines fließfähigen Schüttgutes von der Unterseite einer in einem Behälter enthaltenen, durch einen Leitrost abgestützten Schüttgutsäule.

Eine solche Einrichtung ist durch die EP-A1-0 225 475 bekannt. Mit dieser bekannten Einrichtung ist bereits die Aufgabe gelöst,

- eine genaue Steuerung des Schüttgut-Abrieselns an der Unterseite der Schüttgutsäule im allgemeinem und der Filtermasse im besonderen unter Ermöglichung einer "Kolben-Strömung" zu erreichen;
- bevorzugte Durchströmungszonen mit Hohlräumen an der Unterseite der Schüttgutsäule zu vermeiden, wodurch auch unterschiedliche Beladungen der in den Hohlräumen aufgewirbelten Schüttgutpartikel bzw. Filtermasseteilchen und der angrenzenden Filter- oder Schüttgutzonen vermieden sind; und
- eine robuste und trotzdem präzise und genau dosierbar arbeitende Durchsatzstellanordnung für die genannte Einrichtung zu schaffen.

In den Ausführungsbeispielen nach der genannten EP-A1 werden Jod-Sorptionsfilter für Kernkraftanlagen mit Aktivkohlekörpern als Filtermasse beschrieben, denen eine Rechteck-Grundfläche bzw. ein Rechteck-Grundriß des Filterbehälters, der Schüttgutsäule, eines ersten und eines zweiten Steuerrostes, eines dazwischen befindlichen Gitterrostes und eines die Schüttgutsäule abstützenden Leitrostes zugrundegelegt ist.

Der vorliegenden Erfindung liegt die Aufgabe Zugrunde, die bekannte Einrichtung universeller zu gestalten, wobei das bewährte Durchsatzstellprinzip mit Gitterkammern eines Gitterrostes, die abwechselnd entweder befüllt oder aber entleert werden - ein Kurzschluß für das Schüttgut durch eine Gitterkammer hindurch ist nicht möglich - beibehaltem wird. Aufgrund dieses feindosierbaren wechselweisen Befüllens und Entleerens erster und zweiter Gruppen von Gitterkammern werden wesentliche Voraussetzungen zur Realisierung der erwünschten Kolbenströmung des Schüttgutes und damit der immer gleichmäßigen Beladung erzielt.

Zur Lösung dieser Aufgabe geht die Erfindung aus von einer Einrichtung zum gesteuerten Abzug möglichst planparalleler Schichten eines fließfähigen Schüttgutes von der Unterseite einer in einem kreiszylindrischen Behälter enthaltenen, durch einen Leitrost abgestützten Schüttgutsäule, wobei die Erfindung durch die folgenden weiteren Merkmale gekennzeichnet ist:

- unterhalb des Leitrostes ist im Abstand zu diesem und mit etwa gleicher Grundfläche ein stationärer Gitterrost mit nebeneinander liegenden Gitterkammern angeordnet,

- an der Oberseite des Gitterrosts im Zwischenraum zwischen diesem und dem Leitrost ist ein die Grundfläche des Gitterrosts überdeckender, um eine vertikale Achse drehbar gelagerter erster Steuerrost angeordnet, welcher mit der Gitterrostteilung entsprechenden, einander abwechselnden Durchlaßöffnungen und Absperrfeldern versehen ist,
- und an der Unterseite des Gitterrostes ist ein zweiter, ebenfalls um die vertikale Achse drehbar gelagerter Steuerrost angeordnet, dessen Durchlaßöffnungen und Absperrfelder in bezug auf diejenigen des ersten Steuerrostes so angeordnet sind, daß eine erste Gruppe von Gitterkammern des Gitterrostes über die Durchlaßöffnungen des ersten Steuerrostes mit Schüttgut gefüllt und an ihrer Unterseite von den Absperrfeldern des zweiten Steuerrostes gegen Abrieseln ihres Schütt-Depots abgesperrt ist, dagegen eine zweite Gruppe von Gitterkammern mittels der Absperrfelder des ersten Steuerrostes gegen Aufnahme von Schüttgut abgedeckt und von der Durchlaßöffnungen des zweiten Steuerrostes zum Entleeren ihres Schüttgut-Depots freigegeben ist, und umgekehrt.

Vorteilhafte Weiterbildungen sind in den Patentansprüchen 2 bis 10 angegeben.

Die mit der Erfindung erzielbaren Vorteile sind zunächst die gleichen wie sie unter Ziffer 1 bis 6 der genannten EP-A1 aufgeführt sind, weil der grundsätzliche Aufbau des Wanderbettfilters mit seiner Einrichtung zum gesteuerten Abzug von fließfähigem Schüttgut beibehalten worden ist. Darüber hinaus ist aber noch auf die folgenden speziellen Vorteile hinzuweisen: Nicht nur bei kerntechnischen Anlagen, sondern auch in der Lüftungs- und Klimatechnik, in der chemischen Industrie usw. besteht der Bedarf, Schüttgutsäulen im allgemeinen und das Filterbett von Wanderbettfiltern im besonderen gleichmäßig nach Art einer Kolbenströmung nach unten abziehen zu können, und dies im diskontinuierlichen, quasi-kontinuierlichen oder kontinuierlichen Betrieb, je nachdem, wie stark das Schüttgut bzw. die Filtermasse von den Reaktionsgasen und -dämpfen im Gegenstrom von unten nach oben durchströmt wird. Dabei handelt es sich auch vielfach um Schüttgutsäulen bzw. Wanderbettfilter mittlerer und kleiner Größe, denen ebenso wie den relativ großen Wanderbettfiltern (Jod-Sorptionsfilter mit Aktivkohlekörpern) in Kernkraftanlagen das Schüttgut bzw. die Filtermasse über Rohrleitungen von oben zugeleitet und das verbrauchte Schüttgut bzw. die verbrauchte Filtermasse über entsprechende Rohrleitungen von unten entnommen wird, d.h., diese Rohrleitungen haben normalerweise Rundquerschnitt. Bei Schüttsäulen oder Wanderbettfiltern mittlerer oder kleiner Größe, bei denen man keine aufwendigen Schüttgut-Verteil-Einrichtungen an der Oberseite der Schüttgutsäule anbringen will, kommt es darauf an, daß das zugeführte frische Schüttgut sich gleichmäßig über den Querschnitt der Schüttgutsäule verteilt, und hier ist der Rundquerschnitt der erfindungsgemäßen Einrichtung besonders geeignet, nicht nur den gleichmäßigen Abzug des verbrauchten Schüttgutes an der Unterseite der Schüttgutsäule zu ermöglichen, sondern auch die gleichmäßige Verteilung des frischen, von oben zugeleiteten Schüttgutes. Es bildet sich dann nämlich ein Schüttgutkegel aus, welcher das Schüttgut auf den Rundquerschnitt der Schüttgutsäule gleichmäßig verteilt.

Gegenstand der Erfindung ist auch eine Verwendung der Einrichtung, wie sie in Anspruch 1 oder einem der Folgeansprüche charakterisiert ist, bei einem Wanderbettfilter zum Ablassen verbrauchter Filtermasse im Zuge der Reinigung von gas- oder dampfförmigen Medien, von welchen die von oben nach unten bewegbare Schüttgutsäule in einem Winkelbereich zwischen gleichgerichtet bis entgegengesetzt zu der Schüttgutfließrichtung durchströmbar ist.

Im folgenden werden anhand der Zeichnung ein Ausführungsbeispiel der Erfindung und eine Variante der darin verwendeten Steuerroste beschrieben und weiter Merkmale, Vorteile sowie die Wirkungsweise näher erläutert. In der Zeichnung zeigt in vereinfachter, schematischer Darstellung:

FIG 1 in einem axialen Teilschnitt nach der Linie I-I aus FIG 4 ein Wanderbettfilter mit hohlzylindrischem Filterbehälter, in welchen die Einrichtung nach der Erfindung eingebaut ist.

FIG 2 eine vereinfachte Draufsicht auf die obere, ein Rohrstutzenfeld bildende Lochplatte.

FIG 3 eine Draufsicht, teils im Detail, teils vereinfacht mit einem Rasterlinienfeld, auf den unteren Leitrost.

FIG 4 den Querschnitt gemäß der Schnittebene IV-IV aus FIG 1, zugleich eine Ansicht auf den oberen Steuerrost.

FIG 5 in etwas verkleinertem Maßstab eine Draufsicht auf den zwischen den beiden Steuerrosten befindlichen stationären Gitterrost.

FIG 6 eine vereinfachte Draufsicht auf die beiden Steuerroste, wobei die radial orientierten Langlöcher für die Durchlaßöffnungen des oberen Steuerrostes ausgezogen und für diejenigen des unteren Steuerrostes gestrichelt dargestellt sind und zusätzlich auf sichel- oder spiralförmigen Linien angeordnete Langlöcher als Durchlaßöffnungen dargestellt sind.

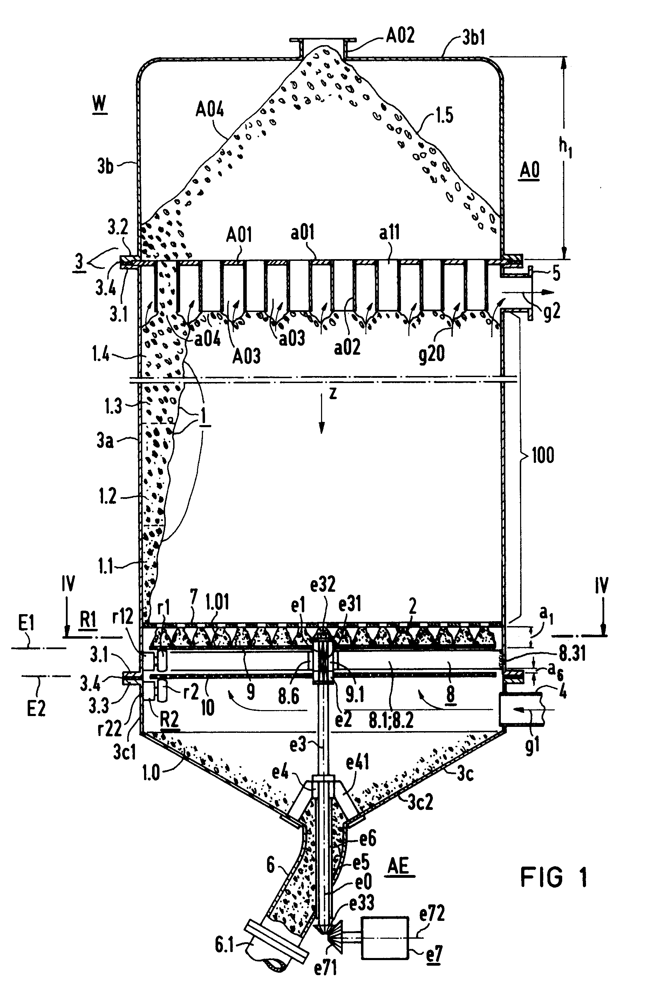

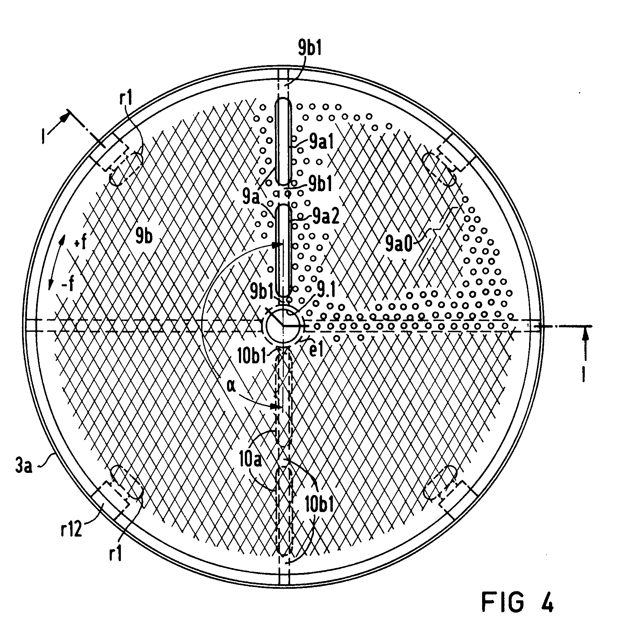

FIG 1 zeigt ein Beispiel für die Einrichtung nach der Erfindung zum gesteuerten, möglichst planparallelen Abzug von fließfähigem Schüttgut 1 an der Unterseite 2 einer in einem hohlzylindrischen Behälter 3 enthaltenen Schüttgutsäule 100. Die dargestellte Einrichtung gehört insbesondere zu einem Wanderbettfilter zum Ablassen verbrauchter Filtermasse 1.0 (abrieselnde Masse) und 1.1 (unterste Schicht der Schüttgutsäule 100). Im folgenden wird die Schüttgutsäule 100 vereinfachend als Filterbett bezeichnet, ebenso wie das Schüttgut 1 als Filtermasse bezeichnet wird, weil die Schüttgutsäule 100 vielfach zu einem Wanderbettfilter gehört, und hierbei insbesondere die Filtermasse aus Aktivkohlekörpern besteht, ohne daß jedoch die Erfindung auf solche WanderbettFilter beschränkt wäre. Das als Ganzes mit W bezeichnete Wanderbettfilter dient zur Reinigung von gas- oder dampfförmigen Medien. Dabei kann es sich in einem Anwendungsfall um die Abluft von kerntechnischen Anlagen handeln, die, bevor sie zum Abluftkamin strömt, entsprechend gereinigt werden muß, wobei es hier insbesondere um die Rückhaltung des sogenannten Radiojods ankommt, deshalb auch die Bezeichnung "Jod-Sorptionsfilter Typ Wanderbettfilter". Die durch den Einlaßstutzen 4 zuströmenden Gase und/oder Dämpfe sind durch die Pfeile gl symbolisiert, sie durchströmen das Filterbett 100 von unten nach oben im Gegenstrom zur Fließrichtung z der Filtermasse 1, wobei die in den Gasen oder Dämpfen enthaltenen Verunreinigungen von der Filtermasse adsorbiert werden. Die gereinigten Gase oder Dämpfe verlassen den Behälter 3 gemäß Strömungspfeil g2 durch den Auslaßstutzen 5. Der hohlzylindrische Behälter 3 mit einer Wandung aus nichtrostendem Stahl weist einen Rundquerschnitt auf (vergleiche FIG 4) und ist in seiner Achsrichtung gesehen aus dem hohlzylindrischen Mittelteil 3a, der nach oben abgeschlossenen zylindrischen Haube 3b und dem zylindrisch-konischen Bodenteil 3c zusammengesetzt.

Der Mittelteil 3a des Behälters 3 ist mit der Haube bzw. dem Oberteil 3b und dem Boden- bzw. Unterteil 3c über Ringflansche 3.1-3.2 bzw. 3.1-3.3 dichtend verbunden. Zwischen den einander zugekehrten Ringflanschflächen können nicht näher dargestellte Dichtungsringe 3.4 eingefügt sein. Der Unterteil 3c des Behälters 3 ist aus einer zylindrischen Partie 3c1 und einer konischen Partie 3c2 zusammengeschweißt; letztere läuft in einen Auslaßstutzen 6 für die verbrauchte Filtermasse 1.0 aus. Auf die diesen Auslaßstutzen 6 mit einer Antriebswelle durchdringende Antriebseinrichtung AE wird später eingegangen. Innerhalb der an den Auslaßstutzen 6 über eine Flanschverbindung angeschlossenen, nur angedeuteten Auslaßleitung 6.1 sind - hier nicht näher interessierende - Armaturen, z.B. in Form von Schleusen, Klappen oder Durchlaßventilen angeordnet zu denken. Diese werden nur zum Ablassen der Filtermasse geöffnet und sind im übrigen geschlossen.

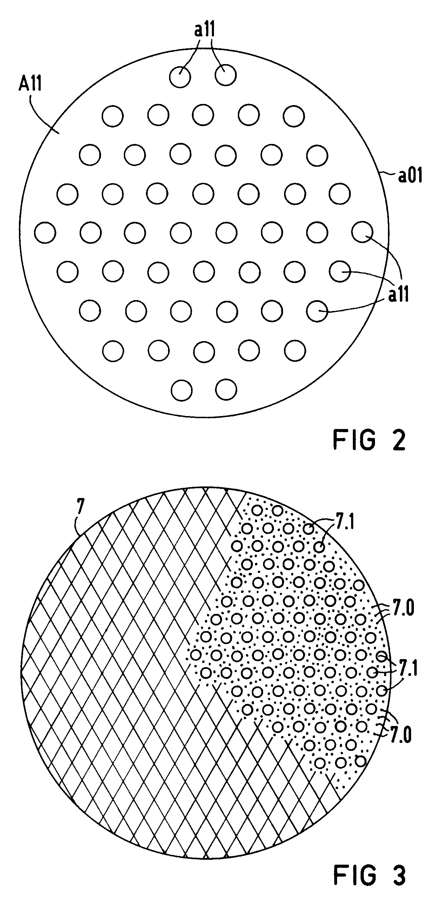

An der Oberseite des Filterbettes 100 ist eine als Ganzes mit A0 bezeichnete Einrichtung zur Filtermassen-Zufuhr und zur Gasabfuhr angeordnet. Diese besteht aus einer Rostkonstruktion A01 und einer zentrisch an die Deckwand 3b1 des Oberteils 3b angeschlossenen Füllstutzen A02. Die Rostkonstruktion A01 besteht aus einer Lochplatte a01, welche Bohrungen bzw. kreisrunde Löcher a11, angeordnet in Form eines hexagonalen Rasters, aufweist, und einem Feld von Rohrstutzen a02, dessen Stutzenachsen koaxial zu den Achsen der Löcher a11 verlaufen, d.h. die Rohrstutzen a02 sind in die Löcher a11 eingesetzt und im Lochrandbereich befestigt, vorzugsweise verschweißt. Durch die Freiräume a03 zwischen den Rohrstutzen a02 wird eine Sammelkammer für die gemäß Pfeilen g20 die Filtermassensäule 100 verlassenden Ströme der Gase bzw. Dämpfe gebildet. Diese aus den einzelnen Freiräumen a03 gebildete Sammelraum A03 kommuniziert seitlich mit wenigstens einem Auslaßstutzen 5, der in die Mantelwand des Mittelteils 3a eingeschweißt ist. Die über den Füllstutzen A02 zugeführte frische Filtermasse 1.5 lagert sich in Form eines Schüttkegels A04 auf der Rostkonstruktion A01 ab, wobei die Höhe $h_1$ des Oberteils 3b bzw. - gleichbedeutend damit - der Abstand der Mündung des Füllstutzens A02 von der Lochplatte a01 so groß sind, daß die Basis des Schüttkegels A04 das Lochfeld A11 aus den einzelnen Löchern a11 überdeckt. An den Mündungen der einzelnen Rohrstutzen a02 bilden sich einzelne Schüttkegel a04 aus, wie schematisch angedeutet, und diese ergeben einen Rückstau, so daß bei dem dargestellten Füllzustand des Filterbettes 100 keine weitere frische Filtermasse 1.5 von oben durch das Lochfeld A11 und dementsprechend durch das Feld der Rohrstutzen a02 nachrutschen kann. Dies geschieht erst dann, wenn von der Unterseite des Filterbettes verbrauchte Filtermasse abgerieselt wird. FIG 2 zeigt das Lochfeld A11 im Grundriß. Die Lochplatte a01 ist mit ihrem äußeren ringförmigen Rand zwischen den beiden Ringflanschen 3.1 - 3.2 dichtend eingespannt, und die Flansche sind zu diesem Zweck mit einer passenden ringförmigen, den Rand aufnehmenden Aussparung versehen.

Entsprechend seiner Beladung mit den zurückzuhaltenden Stoffen ist das Filterbett 100 in Schichten mit verschieden starker Punktierung und mit durch Stricheln angedeuteten Schichtgrenzen im linken Teil der FIG 1 gezeichnet. Die unterste Schicht 1.1 ist am meisten beladen, die darüber angeordnete 1.2 etwas weniger, die Schicht 1.3 noch weniger, und die oberste Schicht 1.4 ist praktisch noch nicht beladen, wenn sie gerade frisch durch die Rohrstutzen a02 eingerieselt worden ist. Grundsätzlich ist es möglich, einzelne Schichten oder Lagen des Filterbettes 100 kontinuierlich an der Unterseite abzurieseln und kontinuierlich durch frische Filtermasse 1.5 aus dem Schüttkegel A04 aufzufüllen. Bei Aktivkohlefiltern, insbesondere Jod-Sorptions-Filtern, wird im allgemeinen quasi - kontinuierlich bzw. intermittierend jeweils die unterste Schicht 1.1 abgerieselt und durch eine frische Lage an der Oberseite des Filterbettes 100 aufgefüllt, so daß die Höhe des Filterbettes 100 und damit die Filterqualität unverändert bleiben. Die dargestellte Schichtung 1.1 bis 1.4 ist willkürlich und zu Demonstrationszwecken gewählt worden; im praktischen Betrieb kann die während eines Abrieselvorganges abgerieselte unterste Schicht 1.1 in ihrer Höhe kleiner oder auch größer sein, ferner ist der Übergang in der Beladung der einzelnen Schichten 1.1 bis 1.4 nicht (wie lediglich zu Verständniszwecken dargestellt) sprunghaft, sondern im allgemeinen stetig.

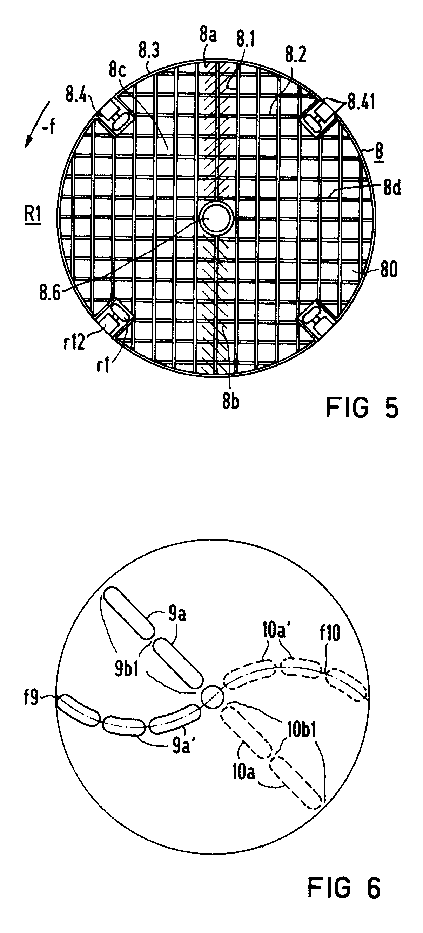

Zur Abstützung des Filterbettes 100 ist an dessen Unterseite ein im wesentlichen ebener Leitrost 7 in Form eines Lochbleches angeordnet, der gewissermaßen die untere Begrenzungsfläche oder -linie der untersten Schicht 1.1 des Filterbettes 100 bildet und im Grundriß aus FIG 3 erkennbar ist. Seine über die Grundfläche des Filterbettes 100 verteilten Öffnungen 7.1, die in einem hexagonalen Raster angeordnet sind, dienen zum Abrieseln der Filtermasse 1. Der Durchmesser der Öffnungen 7.1 beträgt deshalb ein Mehrfaches bzw. Vielfaches der Korngröße der Filtermasse 1. Wenn diese aus Aktivkohlekörpern besteht, so werden diese vielfach aus stranggepreßter Kohle hergestellt in Form von zylindrischen Körpern von 1 bis 2 mm Durchmesser und 1,2 bis 2 mm Länge; sie können auch aus sogenanntem Bruchkorn mit einer Körnung von 1 bis 2 mm bestehen. Die Öffnungen 7.1 sind Abrieselöffnungen im Unterschied zu den punktiert im rechten Teil der FIG 3 angedeuteten Luftöffnungen 7.0, welche ebenso wie die Abrieselöffnungen 7.1 über die gesamte Fläche des kreisscheibenförmigen Leitrostes 7 verteilt zu denken sind und in ihrer lichten Weite kleiner sind als die Korngröße der Filtermasse 1. Die Abrieselöffnungen 7.1 dienen also zum Abrieseln der Filtermasse 1 und zum Einlassen eines Teils der von unten zuströmenden gas- oder dampfförmigen Medien g1, und die Luftöffnungen 7.0 dienen nur zum Einlassen der gas- oder dampfförmigen Medien g1; sie sind vereinfachend als Luftöffnungen bezeichnet, um damit zum Ausdruck zu bringen, daß sie gasdurchlässig, aber nicht teilchendurchlässig sind. Im Abstand zur Unterseite des Filterbettes 100 bzw zum Leitrost 7 ist unterhalb des Leitrostes 7 ein stationärer Gitterrost 8 angeordnet (vergleiche auch FIG 5), in der Hauptsache bestehend aus einander kreuzenden Hochkant-Gitterstäben 8.1 (Längsstäbe) und 8.2 (Querstäbe) nach Art eines Lichtgitterrostes. Durch die einander kreuzenden Gitterstäbe 8.1, 8.2 ergeben sich jeweils kleine Gitterkammern 80 von rechteckigem oder quadratischem Grundriß. Eine andere (nicht dargestellte) Ausführung des stationären Gitterrostes 8 wäre die, daß Radialstreben und konzentrische Ringstreben zusammengefügt werden, so daß sich ein Grundriß der Gitterkammern 80 in Form von Kreisringabschnitten bzw. kleinen Sektoren ergeben würde.

Der Außenumfang des Gitterrostes 8 wird umfaßt bzw. gebildet von einem Ringrahmen 8.3, welcher mit den Enden der Gitterstäbe 8.1 bzw. 8.2 fest verbunden ist. Da auch die Gitterstäbe 8.1, 8.2 miteinander zumindest formschlüssig (wechselseitig mittels Schlitzen und Aussparungen) miteinander verbunden sind, so ist der Gitterrost 8 ein starres Gebilde. Der Ringrahmen 8.3 ist im Bereich von radial orientierten Kammern 8.4 an seinem äußeren Umfang unterbrochen, jedoch bilden die drei Wände 8.41 der Kammereinfassung jeweils ein Fortsetzung des Ringrahmens 8.3.

Der Ringrahmen 8.3 ist mit dem Innenumfang der zylindrischen Behälterwandpartie 3a an mehreren Stellen verschweißt, ersichtlich ist eine Schweißstelle 8.31 in FIG 1. In die gleichmäßig über den Umfang des Gitterrostes 8 verteilten Kammern 8.4, dargestellt sind je eine Kammer 8.4 pro Quadranten, ragen Tragrollen r1 einer ersten Tragrollenanordnung R1, welche zur rollenden Lagerung des Randbereiches eines ersten kreisscheibenförmigen (oberen) Steuerrostes 9 (siehe FIG 1, 4 und FIG 5) dienen. Die Tragrollen r1 sind an Rollenböcken r12 drehbar gelagert, welch letztere am Innenumfang der zylindrischen Wandpartie 3a befestigt, z.B. festgeschraubt oder festgeschweißt sind.

An der Oberseite des Gitterrostes 8 ist im Abstand $a_1$ zwischen diesem Gitterrost 8 und dem Leitrost 7 bzw. der Unterseite des Filterbettes 100 der schon erwähnte, die Grundfläche von Leit- und Gitterrost 7, 8 überdeckende, in einer ersten Horizontalebene E1 verdrehbare erste Steuerrost 9 angeordnet, welcher - vergleiche FIG 4 und FIG 6 - mit Durchlaßöffnungen 9a und Absperrfeldern 9b versehen ist. Dargestellt ist im Ausführungsbeispiel nach FIG 4 eine in radialer Richtung orientierte Langlochreihe, bestehend aus den beiden Langlöchern 9a1 und 9a2. Die gesamte Fläche des ersten Steuerrostes 9 ist mit einer Perforierung bzw. Feinlochung 9a0 versehen, die so wie beim Leitrost 7 die Feinlochung 7.0 gasdurchlässig, aber teilchenundurchlässig ist. Wenn man vereinfachend annimmt, daß die Durchlaßöffnungen 9a einen Winkel von etwa 10° überstreichen, so verbleibt für die Absperrfelder 9b der Rest von rund 350°. Wenn der obere Steuerrost in eine der beiden Drehrichtungen + f oder - f gedreht wird, so folgen für die jeweiligen Gitterkammern 80 mithin die Durchlaßöffnungen 9a und die Absperrfelder 9b abwechselnd aufeinander. In der Mitte des ersten Steuerrostes 9 befindet sich eine kreisförmige Aussparung 9.1, in welcher eine Zylinderbüchse e1 eingepaßt und vorzugsweise durch Verschweißen befestigt ist. Diese Büchse e1 durchdringt eine Führungsbüchse 8.6, welche (vergleiche FIG 1 und FIG 5) am Innenumfang einer zentralen kreisförmigen Aussparung des Gitterrostes 8 befestigt, insbesondere eingeschweißt ist.

Unterhalb des stationären Gitterrostes 8 befindet sich in einer zweiten Horizontalebene E2 ein zweiter kreisscheibenförmige, gleichartig zum ersten Steuerrost 9 ausgebildeter zweiter Steuerrost 10, welcher unterhalb des Gitterrostes 8 mit nur geringem Abstand $a_6$ drehbar angeordnet ist. Am Innenumfang einer zentralen, nicht näher bezeichneten Bohrung dieses zweiten Steuerrostes 10 ist gleichfalls eine zylindrische Büchse e2 eingeschweißt, welche kürzer ist als die Büchse e1 des ersten Steuerrostes 9. Beide Büchsen e1, e2 sitzen drehfest auf dem Mehrkant-, insbesondere Vierkant-Ende e31 der Antriebswelle e3 und sind mit einem zu dem Außenvierkant e31 passenden Innenvierkant versehen. Durch die in das freie Ende der Antriebswelle e3 eingeschraubte Mutter e32 mit Beilagscheibe wird die Büchse e1 auf die Büchse e2 gepreßt. Bevorzugt sind die aufeinandergepreßten Stirnflächen der beiden Büchsen e1, e2 noch mit einer Verzahnung nach Art der Hirthverzahnung versehen, so daß beide Steuerroste 9, 10 drehfest miteinander verspannt sind und von der Antriebswelle e3 gemeinsam relativ zum stationären Gitterrost 8 zwischen ihnen in den Horizontalebenen E1, E2 langsam gedreht werden können. Der obere Steuerrost 9 wird dabei durch die schon beschriebenen Tragrollen r12 im Bereich einer äußeren Ringzone rollend unterstützt; jedoch wird auch der untere Steuerrost 10 im Bereich seiner äußeren Ringzone durch eine zweite Tragrollenanordnung R2 mit Tragrollen r2 und Rollenböcken r22 unterstützt.

Betrachtet man wieder FIG 4, so sieht man, daß der zweite (untere) Steuerrost 10 auch mit Durchlaßöffnungen 10a und Absperrfeldern 10b versehen ist, jedoch sind die entsprechend langlochartig ausgebildeten Durchlaßöffnungen 10a um einen Drehwinkel von $\alpha$ = 180° versetzt. Werden deshalb bei Drehung der beiden Steuerroste 9, 10 durch die Durchlaßöffnungen 9a des ersten Steuerrostes 9 nacheinander die Gitterkammern 80 (FIG 5) mit Filtermasse 1 gefüllt - diese rieselt durch die Abrieselöffnungen 7.1 des Leitrostes 7 entsprechend den sich ausbildenden Schüttkegeln 1.01 jeweils durch die Durchlaßöffnungen 9a in die Gitterkammern 80 - , so werden diese kleinen Filtermassen-Depots oder -Portionen in den Gitterkammern 80 phasenverschoben (in diesem Falle um einen Winkel von 180°) von den Durchlaßöffnungen 10a des zweiten Steuerrostes 10 nacheinander zum Abrieseln gebracht. Bei der Ausführung und Anordnung der Durchlaßöffnungen 9a, 10a und Absperrfelder 9b, 10b ist dann bei einer vollen Umdrehung von 360˚ jeder Punkt bzw. jede Gitterkammer 80 des Gitterrostes 8 einmal mit Filtermasse berieselt und - verzögert - auch wieder davon befreit worden. FIG 5 zeigt die zu FIG 4 gehörige Füll- und Entleerungssituation der Gitterkammern 80: die unter den Durchlaßöffnungen 9a befindlichen Gitterkammern sind solche der ersten Gruppe 8a (nach oben offen, nach unten abgesperrt) und durch Schraffur markiert. Die oberhalb der Durchlaßöffnungen 10a befindlichen Gitterkammern 8b (ebenfalls schraffiert) gehören zur zweiten Gruppe (nach unten offen, nach oben abgesperrt). Dazwischen befindet sich eine Gruppe 8c von Gitterkammern 80, welche bei angenommener Drehung der Steuerroste 9, 10 in Richtung - f noch leer, weil durch 10a entleert ist und von (9a) demnächst befüllt wird. Die Gruppe 8d der Gitterkammern 80, ist dagegen noch gefüllt und wird bei Drehung in Richtung - f demnächst entleert. Bei Drehung der Steuerroste 9, 10 in Richtung - f (oder entgegengesetzt in Richtung + f) wechseln sich die Gruppen 8a, 8b, 8c, 8d der Gitterkammern somit laufend ab. Für die Gruppen 8c und 8d bzw. die zugehörigen Flächenbereiche ist charakteristisch, daß sie (momentan) boden- und deckseitig durch die lochfreien Zonen der Steuerroste 9, 10 abgesperrt werden.

Wie man aus FIG 1 und 4 erkennt, kann man den Drehwinkel der beiden kreisscheibenförmigen Steuerroste 9, 10 zueinander einstellen, indem man die Schraubverbindung zwischen den beiden Büchsen e1, e2 lockert und sodann die obere Büchse e1 mit dem ersten Steuerrost 9 relativ zur unteren Büchse e2 mit ihrem Steuerrost 10 in die gewünschte Position verdreht. Danach werden die beiden Büchsen e1, e2 und damit die zugehörigen Steuerroste 9, 10 wieder drehfest miteinander verspannt. Im Rahmen der Erfindung läge auch eine Ausführung, bei welcher beide Steuerroste 9, 10 mit je einem separaten Drehantrieb, z.B. über eine koaxiale Welle, versehen sind, wobei jedoch eine Verriegelung vorgesehen werden müßte, welche verhindert, daß die ersten und zweiten Durchlaßöffnungen 9a, 10a miteinander zur Deckung gelangen. Eine solche Ausführungsform wäre aber komplizierter; der dargestellte gemeinsame Antrieb zur gemeinsamen Drehung der beiden Steuerroste 9, 10, mit der Möglichkeit, den Drehwinkel α im Bedarfsfalle zu verändern, ist vorteilhafter.

Aus FIG 4 sieht man besonders deutlich die Ausführung mit auf einem Radius angeordneten Langlöchern 9a1, 9a2, wobei zwischen diesen Langlöchern sowie zwischen den Langlöchern und dem Außenrand sowie der Büchse e1 von Durchlaßöffnungen 9a freie Absperrstege 9b1 stehen bleiben. Entsprechende Absperrstege 10b1 sind aus Festigkeitsgründen am unteren Steuerrost 10 vorgesehen. Die stark vereinfachte Darstellung nach FIG 6 zeigt, daß Durchlaßöffnungen 9a', 10a' im ersten und zweiten Steuerrost 9 bzw. 10 längs einer sichel- oder spiralförmigen Linie f9 bzw.f10 angeordnet sind. Diese Durchlaßöffnungs-Ausbildung und -Anordnung kann anstelle der auf Radien liegenden Durchlaßöffnungen 9a, 10a oder zusätzlich dazu vorgesehen sein. Wird sie zusätzlich vorgesehen, so wird bei einer vollen Umdrehung der Steuerroste 9, 10 etwa doppelt soviel abgerieselt wie dann, wenn nur eine Langlochreihe pro Steuerrost verwendet würde. Wenn, wie dargestellt, auf eine radiale Flucht von Durchlaßöffnungen 9a eine sichelförmige Anordnung 10a' des zweiten Steuerroste 10 folgt und umgekehrt, kann das unter Umständen Vorteile haben in Bezug auf die zu überwindenden Reibungskräfte bei Drehung der beiden Steuerroste 9, 10. Wie bereits angedeutet, ist der Drehwinkel α, um welchen die Durchlaßöffnungen im zweiten Steuerrost 10 in Bezug auf diejenigen des ersten Steuerrostes 9 versetzt sind, so zu wählen, daß unter Berücksichtigung des Schüttwinkels der in den Gitterkammern 80 jeweils vorhandenen Portionen an Filtermasse ein direktes Durchrieseln von den ersten Durchlaßöffnungen 9a zu den zweiten Durchlaßöffnungen 10a verhindert ist.

Die Antriebswelle e3 (siehe FIG 1), deren vertikale Achse mit e0 bezeichnet ist, ist an einem Tragdrucklager e4 gelagert, welch letzteres von einem Lagerbock e41, der sich mit Stützbeinen an einer den Auslaßstutzen 6 umgebenden Ringzone der Behälterwand 3c2 abstützt, getragen ist. Bei der dargestellten Ausführung mit einem im Kegelspitzenbereich des kegelförmigen Behälterbodens 3c2 angeschlossenen Auslaßstutzen 6 ist die dargestellte Ausführung besonders vorteilhaft, bei welcher die Antriebswelle e3 nach unten durch den gekrümmt verlaufenden Auslaßstutzen 6 (Durchführungsstelle e5) gasdicht hindurchgeführt ist. Der durch den Auslaßstutzen 6 hindurchgeführte Teil der Antriebswelle e3 ist von einer Führungshülse e6 umgeben, welche zugleich einen Schutz gegenüber der Filtermasse 1.0 bietet und im Bereich der Durchführungsstelle e5 durch die Wand des Auslaßstutzens 6 nach außen hindurchragt. Am unteren Ende der Antriebswelle e3 ist ein Kegelrad e33 vorgesehen, welches mit dem Kegelrad e71 der horizontalen Antriebswelle e72 des Antriebsmotors e7 kämmt. Dieser Motor e7 ist nur schematisch angedeutet; zu ihm gehört auch ein Untersetzungsgetriebe, weil nur ein langsames Drehen der Antriebswelle e3 bzw. der Steuerroste 9, 10 gewünscht und erforderlich ist, z.B. eine Umdrehung pro Minute.

Die Erfindung ist auch für Schüttgutsäulen oder Wanderbettfilter geeignet, bei denen eine Strömung der zu reinigenden und/oder wärmetauschenden Gase nicht oder nicht ausschließlich im Gegenstrom, sondern (auch) im Gleichstrom, Kreuzstrom oder Mischstrom, bezogen auf die Fließrichtung des Schüttgutes, erfolgt. Es sind damit Anström- und Durchströmrichtungen der Gase und Dämpfe im Winkelbereich zwischen Gleichstrom und Gegenstrom realisierbar, ohne vom Gegenstand der Erfindung abzuweichen. Beispiele hierfür sind nicht dargestellt, weil sie sich aus dem Stand der Technik, vgl. z.B. DE-AS 28 20 650 oder DE-PS 457 430, ergeben.

**Patentansprüche**

1. Einrichtung zum gesteuerten Abzug möglichst planparalleler Schichten eines fließfähigen Schüttgutes (1) von der Unterseite einer in einem kreiszylindrischen Behälter (3) enthaltenen, durch einen Leitrost (7) abgestützten Schüttgutsäule (100), wobei
   - unterhalb des Leitrostes (7) im Abstand (al) zu diesem und mit etwa gleicher Grundfläche ein stationärer Gitterrost (8) mit nebeneinander liegenden Gitterkammern (80) angeordnet ist,
   - an der Oberseite des Gitterrosts (8) im Zwischenraum zwischen diesem und dem Leitrost (7) ein die Grundfläche des Gitterrosts (8) überdeckender, um eine vertikale Achse (e0) drehbar gelagerter erster Steuerrost (9) angeordnet ist, welcher mit der Gitterrostteilung entsprechenden, einander abwechselnden Durchlaßöffnungen (9a) und Absperrfeldern (9b) versehen ist,
   - und an der Unterseite des Gitterrostes (8) ein zweiter, ebenfalls um die vertikale Achse (e0) drehbar gelagerter Steuerrost (10) angeordnet ist, dessen Durchlaßöffnungen (10a) und Absperrfelder (10b) in bezug auf diejenigen des ersten Steuerrostes (8) so angeordnet sind, daß eine erste Gruppe (8a) von Gitterkammern des Gitterrostes (8) über die Durchlaßöffnungen (9a) des ersten Steuerrostes (9) mit Schüttgut (1) gefüllt und an ihrer Unterseite von den Absperrfeldern (10b) des zweiten Steuerrostes (10) gegen Abrieseln ihres Schütt-Depots (11) abgesperrt sind, dagegen eine zweite Gruppe (8b) von Gitterkammern (80) mittels der Absperrfelder (9b) des ersten Steuerrostes (9) gegen Aufnahme von Schüttgut (1) abgedeckt und von der Durchlaßöffnungen (10a) des zweiten Steuerrostes (10) zum Entleeren ihres Schüttgut-Depots (11) freigegeben sind, und umgekehrt.

2. Einrichtung nach Anspruch 1, **dadurch gekennzeichnet,** daß der erste und der zweite Steuerrost (9) bzw. (10) an einer gemeinsamen Welle (e3) befestigt und mit dieser gleichzeitig drehbar gelagert sind.

3. Einrichtung nach Anspruch 1 oder 2, **dadurch gekennzeichnet,** daß die Durchlaßöffnungen (9a, 10a) im ersten und/oder zweiten Steuerrost (9) bzw. (10) als radial fluchtende Langlöcher oder Langlochreihen ausgebildet sind.

4. Einrichtung nach Anspruch 1 oder 2, **dadurch gekennzeichnet,** daß die Durchlaßöffnungen (9a, 10a) im ersten und/oder zweiten Steuerrost (9) bzw. (10) längs einer sichel- oder spiralförmigen Linie (f) angeordnet sind.

5. Einrichtung nach einem der Ansprüche 1 bis 4, **dadurch gekennzeichnet,** daß die Durchlaßöffnungen (10a) im zweiten Steuerrost (10) relativ zu denjenigen (9a) des ersten Steuerrostes (9) um einen Drehwinkel ($\alpha$) versetzt sind, welcher mindestens so groß ist, daß unter Berücksichtigung des Schüttwinkels der in den Gitterkammern (80) jeweils vorhandenen Schüttportionen ein direktes Durchrieseln von den ersten (9a) zu den zweiten Durchlaßöffnungen (10a) verhindert ist.

6. Einrichtung nach Anspruch 2, mit je einer radial verlaufenden Langlochreihe als Durchlaßöffnungen in den beiden Steuerrosten (9, 10), **dadurch gekennzeichnet,** daß die beiden Langlochreihen um einen Drehwinkel von ca. 180° gegeneinander versetzt sind.

7. Einrichtung nach einem der Ansprüche 1 bis 6, **dadurch gekennzeichnet,** daß die beiden Steuerroste (9, 10) im Bereich einer peripheren Zone an Stützrollen (r1, r2), welche mit radialer Ausrichtung ihrer Drehachsen an mehreren über den Innenumfang der Behälter-Mantelwand (3a, 3c1) verteilten Stellen gelagert sind, abgestützt sind.

8. Einrichtung nach einem der Ansprüche 2 bis 7, **dadurch gekennzeichnet,** daß die Antriebswelle (e3) der Steuerroste (9, 10) an einem Tragdrucklager (e4), welches von einem Lagerbock (e41) im Behälterbodenbereich getragen ist, gelagert ist.

9. Einrichtung nach Anspruch 8, mit einem im Kegelspitzenbereich eines kegelförmigen Be-

hälterbodens (3c2) angeschlossenen Auslaß-stutzen (6),
**dadurch gekennzeichnet,** daß die Antriebswelle (e3) nach unten durch den Auslaßstutzen (6) gasdicht hindurchgeführt ist.

10. Einrichtung nach Anspruch 9,
**dadurch gekennzeichnet,** daß die Welle (e72) eines horizontal gelagerten Antriebsmotors (e7) über ein Kegelradgetriebe (e71, e31) an die vertikale Antriebswelle (e3) der Steuerroste (9, 10) angekoppelt ist.

11. Verwendung einer Einrichtung nach Anspruch 1 oder einem der folgenden Ansprüche bei einem Wanderbettfilter zum Ablassen verbrauchter Filtermasse im Zuge der Reinigung von gas- oder dampfförmigen Medien, von welchen die von oben nach unten bewegbare Schüttgutsäule in einem Winkelbereich zwischen gleichgerichtet bis entgegengesetzt zu der Schüttgutfließrichtung (z) durchströmbar ist.

## Claims

1. Device for the controlled withdrawal of layers, which are as plane-parallel as possible, of a free-flowing bulk material (1) from the underside of a bulk-material column (100) contained in a circular-cylindrical container (3) and supported by a conductive grate (7), wherein
   - underneath the conductive grate (7) at a distance (a1) from it and with approximately the same area there is arranged a stationary grating (8) with grid chambers (80) lying side by side,
   - at the upper side of the grating (8) in the intermediate space between it and the conductive grate (7) there is arranged a first control grate (9) covering over the area of the grating (8) and rotatably mounted about a vertical axis (eO), the control grate being provided with passage openings (9a) and shutoff panels (9b) which correspond with the grating division and alternate with one another,
   - and on the underside of the grating (8) there is arranged a second control grate (10), likewise rotatably mounted about the vertical axis (eO), the passage openings (10a) and shutoff panels (10b) of the control grate (10) being arranged relative to those of the first control grate (8) in such a way that a first group (8a) of grid chambers of the grating (8) is filled with bulk material (1) by means of the passage openings (9a) of the first control grate (9) and at its underside is shut off by the shutoff panels (10b) of the second control grate (10) against trickling of its bulk deposit (11), whereas a second group (8b) of grid chambers (80) is covered by means of the shutoff panels (9b) of the first control grate (9) against taking up bulk material (1) and is released by the passage openings (10a) of the second control grate (10) for emptying its bulk-material deposit (11), and vice versa.

2. Device according to claim 1,
   characterized in that the first and the second control grate (9) and (10) are attached to a common shaft (e3) and at the same time are rotatably mounted with it.

3. Device according to claim 1 or 2,
   characterized in that the passage openings (9a, 10a) in the first and/or second control grate (9) or (10) are constructed as radially aligned longitudinal holes or rows of longitudinal holes.

4. Device according to claim 1 or 2,
   characterized in that the passage openings (9a, 10a) in the first and/or second control grate (9) or (10) are arranged along a sickle-shaped or spiral-shaped line (f).

5. Device according to one of claims 1 to 4,
   characterized in that the passage openings (10a) in the second control grate (10) are offset relative to those (9a) of the first control grate (9) by an angle of rotation ( α ), which is at least of a size that, having regard to the bulk angle of the bulk portions present in each case in the grid chambers (80), a direct trickling-through from the first passage opening (9a) to the second passage opening (10a) is prevented.

6. Device according to claim 2, each with a radially extending row of longitudinal holes as passage openings in the two control grates (9, 10), characterized in that the two rows of longitudinal holes are offset against one another by an angle of rotation of about 180°.

7. Device according to one of claims 1 to 6,
   characterized in that the two control grates (9, 10) in the region of a peripheral zone are supported on support rollers (r1, r2) which are mounted with radial alignment of their axes of rotation at several points distributed across the inner circumference of the casing wall of the container (3a, 3c1).

8. Device according to one of claims 2 to 7, characterized in that the drive shaft (e3) of the control grates (9, 10) is mounted on a supporting pressure bearing (e4), which is supported by a bearing block (e41) in the region of the container base.

9. Device according to claim 8, having an outlet connecting piece (6) attached in the cone-apex region of a conical container base (3c2), characterized in that the drive shaft (e3) is guided downwards in a gastight manner through the outlet connecting piece (6).

10. Device according to claim 9, characterized in that the shaft (e72) of a horizontally mounted drive motor (e7) is coupled by means of a bevel gearing (e71, e31) to the vertical drive shaft (e3) of the control grates (9, 10).

11. Use of a device according to claim 1 or one of the subsequent claims in a moving bed filter for discharging used filter material in the course of cleaning gaseous or vaporous mediums, which can flow through the bulk-material column, movable from above downwards, in an angular region between rectified to opposite to the flow direction of the bulk material (z).

**Revendications**

1. Dispositif de déchargement commandé de couches, en plans aussi parallèles que possible, d'un produit en vrac (1) susceptible de s'écouler du côté inférieur d'une colonne (100) de produit en vrac, contenue dans une cuve (3) cylindrique à directrice circulaire et soutenue par une grille de passage (7), dans lequel
   - un caillebotis (8), fixe et ayant des mailles (80) côte à côte, est disposé sous la grille de passage (7) à distance (a1) de celle-ci et en ayant la même surface de base,
   - une première grille de commande (9), qui recouvre la surface de base du caillebotis (8), qui est montée tournante par rapport à un axe vertical (e0) et qui est munie d'ouvertures de passage (9a) et de parties pleines (9b) en alternance et en correspondance avec le pas du caillebotis, est disposée du côté supérieur du caillebotis dans l'intervalle compris entre celui-ci et la grille de passage (7),
   - et du côté inférieur du caillebotis est prévue une seconde grille de commande (10), qui est également montée tournante par rapport à l'axe vertical (e0), dont les ouvertures de passage (10a) et les parties pleines (10b) sont disposées par rapport à celles de la première grille de commande (9) de manière qu'un premier groupe (8a) de mailles du caillebotis (8C) est emplie de produit en vrac (1) par les ouvertures de passage (9a) de la première grille de commande (9) et est empêché, sur son côté inférieur, par les parties pleines (10b) de la seconde grille de commande (10), de laisser ruisseler son dépôt en vrac (11), tandis qu'un second groupe (8b) de mailles du caillebotis (80) est recouvert, en étant empêché de recevoir du produit en vrac (1), au moyen des parties pleines (9b) de la première grille de commande (9b) et est dégagé par les orifices de passage (10a) de la seconde grille de commande (10) pour se vider de son dépôt de produit en vrac (11), et inversement.

2. Dispositif suivant la revendication 1, caractérisé en ce que la première et la seconde grilles de commande (9) et (10) sont fixées à un arbre (E3) commun et en sont solidaires en rotation.

3. Dispositif suivant la revendication 1 ou 2, caractérisé en ce que les ouvertures de passage (9a, 10a) de la première et/ou de la seconde grille de commande (9) ou (10) sont constituées sous la forme de trous oblongs ou de rangées de trous oblongs alignés radialement.

4. Dispositif suivant la revendication 1 ou 2, caractérisé en ce que les ouvertures de passage (9a, 10a) de la première et/ou de la seconde grille de commande (9) et (10) sont disposées le long d'une ligne (f) en forme de faucille ou de spirale.

5. Dispositif suivant l'une des revendications 1 à 4, caractérisé en ce que les ouvertures de passage (10a) de la seconde grille de commande (10) sont décalées par rapport à celles (9a) de la première grille de commande (9) d'un angle de rotation (α) qui est au moins si grand, qu'en tenant compte de l'angle de talus des parties en vrac respectivement présentes dans les mailles du caillebotis (80), tout ruissellement direct des premières ouvertures de passage (9a) aux secondes ouvertures de passages (10a) est empêché.

**6.** Dispositif suivant la revendication 2, ayant respectivement une rangée de trous oblongs s'étendant radialement comme ouvertures de passage dans les deux grilles de commande (9, 10), caractérisé en ce que les deux rangées de trous oblongs sont décalées l'une par rapport à l'autre d'un angle de 180° environ.

**7.** Dispositif suivant l'une des revendications 1 à 6,

caractérisé en ce que les deux grilles de commande (9, 10) sont soutenues dans la région d'une zone périphérique par des galets d'appui (r1, r2), qui sont montés, en ayant leur axe de rotation dirigé radialement, en plusieurs points répartis sur le pourtour intérieur de la paroi latérale (3a, 3c1) de la cuve.

**8.** Dispositif suivant l'une des revendications 2 à 7,

caractérisé en ce que l'arbre d'entraînement (e3) des grilles de commande (9, 10) est monté sur un palier de butée porteur (e4), lequel est porté par un sabot d'appui (e41) dans la partie du fond de la cuve.

**9.** Dispositif suivant la revendication 3, ayant un raccord de sortie raccordé dans la région du sommet du cône d'un fond de cuve (3c2) de forme conique,

caractérisé en ce que l'arbre d'entraînement (e3) passe vers le bas, de manière étanche aux gaz, dans le raccord de sortie (6).

**10.** Dispositif suivant la revendication 9,

caractérisé en ce que l'arbre (e72) d'un moteur d'entraînement (e7) monté horizontalement est couplé par une transmission à roues coniques (e71, e31) à l'arbre d'entraînement (e3) vertical des grilles de commande (9, 10).

**11.** Mise en oeuvre d'un dispositif suivant la revendication 1 ou l'une des revendications suivantes, dans un filtre à lit mobile pour évacuer une masse filtrante usée au cours de l'épuration de milieux sous forme de gaz ou de vapeur, par lesquels la colonne de produit en vrac, qui peut être déplacée de haut en bas, peut être traversée dans une plage angulaire comprise entre le sens d'écoulement du produit en vrac (z) et le sens opposé.

FIG 1

EP 0 290 870 B1

FIG 2

FIG 3

12

FIG 4

FIG 5

FIG 6